# EUROPÄISCHE PATENTSCHRIFT

(11) **EP 1 650 500 B1**
(45) Veröffentlichungstag und Bekanntmachung des Hinweises auf die Patenterteilung: **04.01.2017**
(21) Anmeldenummer: 05023134.9
(22) Anmeldetag: 24.10.2005
(51) Int. Cl.: F23G 7/06, F23L 15/04

(54) **Vorrichtung und Verfahren zur Zerstörung von Ozon aus Gasen mit integriertem Wärmetauscher**
Device and process for destroying ozone from gases with integrated heat exchanger
Dispositif et procédé pour la destruction d'ozone des gaz avec échangeur thermique intégré

(30) Priorität: 25.10.2004 DE 102004051945
(43) Veröffentlichungstag der Anmeldung: 26.04.2006
(73) Patentinhaber: Anseros Klaus Nonnenmacher GmbH, 72070 Tübingen-Hirschau (DE)
(72) Erfinder: Nonnenmacher, Klaus, Prof. Dipl.-Ing., 72070 Tübingen (DE); Rohrbach, Guido, Dr., 72768 Reutlingen (DE)
(74) Vertreter: Sacht-Gorny, Gudrun

(56) Entgegenhaltungen:
- DE-A1- 2 535 087
- DE-A1- 3 811 588
- DE-A1- 4 012 119
- DE-A1- 4 024 271
- GB-A- 272 152
- JP-A- 2000 258 083
- JP-A- 2001 027 157
- JP-A- 2001 241 878
- US-B1- 6 471 925

## Beschreibung

Die Erfindung betrifft eine Vorrichtung und ein Verfahren zur Zerstörung von Ozon aus Gasen mit integriertem Wärmetauscher.

Ausgangspunkt für die Erfindung war eine Problemstellung aus dem Bereich der Halbleiterindustrie. Dort wird Ozon eingesetzt, um die sogenannten Wafer gründlich zu reinigen. Dabei werden die in einer Kammer angebrachten Wafer mit Wasser umspült, und der Kammer wird separat Ozon in hoher Konzentration zugeführt. Das aufgrund dieser hohen Konzentration bei der Reinigung nicht umgesetzte Ozon muss aus Sicherheitsgründen vollständig zerstört werden. Dafür war es im Stand der Technik zum Beispiel üblich, das aus der Wafer-Kammer austretende Ozon über Aluminiumoxid zu leiten und mittels UV-Strahlung im Bereich von 254 nm, bei einer Temperatur von etwa 70 °C zu zerstören. Wenn aber in die Wafer-Kammer für die Reinigung zusätzlich 0,1 %ige Flusssäure zudosiert wird, welche die Wafer-Kammer ebenfalls zu einem Anteil wieder verlässt und damit auch über das Aluminiumoxid geleitet wird, reagiert dieses sofort mit der Flusssäure und wird damit unbrauchbar.

Als eine weitere Möglichkeit, verbleibendes Restozon zu entfernen, ist die thermische Zerstörung bei Temperaturen von > 350 ° C bekannt, die sich allerdings durch einen hohen Energieverbrauch auszeichnet. Um diesen hohen Energieverbrauch zu minimieren, wurde im Stand der Technik bereits vorgeschlagen, der für das Erwärmen des Gases erforderlichen Heizung einen Wärmetauscher vor- bzw. nachzuschalten. Dabei wird dann das kalte, der Vorrichtung zugeführte Gas mit dem heißen, ozonfreien, aus der Vorrichtung hinausgeführten Gas vorgeheizt. Dann muss nicht mehr die volle Wärmeleistung in Form von Wärmeenergie zugeführt, sondern nur noch jeweils der Wärmeverlust ausgeglichen werden. Bei dieser Vorgehensweise ist es bisher im Stand der Technik üblich, Röhrenwärmetauscher einzusetzen, die durch eine koaxiale Anordnung der Röhren oder eine sogenannte Revolverbauweise gekennzeichnet sind. Nächteilig dabei ist allerdings, dass eine solche Rohrströmung für Gase durch einen relativ hohen Druckverlust gekennzeichnet ist und entsprechend ein hohes Bauvolumen erfordert.

Zur Zerstörung von Ozon in einer Luftumwälzungsanlage eines Flugzeugs wird in der US-A-2003/0202916 ein katalytischer Konverter vorgeschlagen, mit zueinander versetzt angeordneten rippenförmigen Elementen, die eine Imprägnierung mit dem verwendeten Katalysator und anodisch behandelte Schichten auf einer Seite der Oberfläche aufweisen. Die anodisch behandelten Schichten dienen als Träger für den Katalysator und stellen eine zusätzliche Oberfläche bereit, um den Katalysator besser verteilen zu können. Der so von dem Ozon befreite Luftstrom wird nach dem Verlassen des Konverters über einen Wärmetauscher geleitet, über dessen Aufbau nichts Näheres ausgeführt ist.

Aus der DE-A-199 02 109 ist es bekannt, Rekuperativwärmetauscher zur thermischen Zersetzung von N2O in N2O-haltigen Gasen zu verwenden. Für diese thermische Zersetzung werden Temperaturen von 800 bis 1200 °C benötigt. Der Wärmetauscher weist eine mit Inertpartikeln, wie z.B. A120-Ringen gefüllte Festbettschüttung auf, die auf die erforderliche Betriebstemperatur aufgeheizt wird. Der Wärmetauscher ist somit Reaktionsraum und Wärmetauscher in einem. Das umgesetzte Gas wird anschließend durch Wärmetausch unter Erwärmung der Wärmeträgerfüllung und des erneut umzusetzenden Gases abgekühlt.

Des weiteren ist mit der DE-T-600 07 811 ein auf eine ganz spezielle Anwendung ausgerichtetes Verfahren zur Verhinderung von Verstopfungen in einem Plattenwärmetauscher bekannt geworden, welches für das Heizen und Kühlen eines Gases, das eine Ablagerungen bildende Komponente enthält, entwickelt worden ist. Dieses Gas entsteht bei der Herstellung von (Meth)acrylsäure oder (Meth)acrylsäureestern. Der Plattenwärmetauscher ist entsprechend so modifiziert, dass seine Durchflussbreite genau vorgegeben wird und seine Eintrittsöffnung eine Gasdispersionsplatte aufweist.

Aus der DE 40 12 119 A1 ist eine Vorrichtung zur thermischen Zerstörung von Schadstoffen in Gasen mit einer Wärmeaustauschereinrichtung bekannt. Über ein Gebläse wir die kalte, belastete Luft (Schadluft) als erstes Medium einem ersten Wärmetauscherpaket zugeführt. Drei dieser Wärmetauscherpakete sind kaskadenartig hintereinander geschaltet. Ein Gebläsebrenner führt ein zweites Medium, das sich aus der Schadluft, Frischluft und den Verbrennungsgasen zusammensetzt, gemäß dem Kreuzstromprinzip dem letzten Wärmetauscherpaket zu.

Der vorliegenden Erfindung lag die Aufgabe zugrunde, eine Vorrichtung und ein Verfahren zur Zerstörung von Ozon bereitzustellen, mit dem Ozon in möglichst einfacher und wirtschaftlicher Weise zerstört werden kann, und bei dem insbesondere ein Wärmetauscher eingesetzt wird, der einen möglichst geringen Druckverlust zeigt sowie möglichst platzsparend gebaut werden kann.

Gelöst wird diese Aufgabe durch eine Vorrichtung zur Zerstörung von Ozon aus Gasen, mit einem Wärmetauscher aus zwei voneinander separaten, zueinander in Wärmekontakt stehenden Bereichen und einem Reaktionsraum für die Ozonzerstörung, dem eine Sammelkammer für das ozonhaltige Gas vorgeordnet und eine Verteilerkammer für das im wesentlichen ozonfreie Gas nachgeordnet ist, wobei der eine Bereich einen Einlass für das zu erwärmende, ozonhaltige Gas aufweist und zu dem Reaktionsraum führt, und der andere Bereich unter Umkehrung der Strömungsrichtung von dem Reaktionsraum zu einem Auslass für das abzukühlende, im wesentlichen ozonfreie Gas führt, beide Bereiche jeweils durch dicht nebeneinander liegende und unmittelbar aneinandergrenzende Platten gebildet sind, die Ebenen definieren, mit dem Bereich für das ozonhaltige Gas als Vorheizebene und dem Bereich für das im wesentlichen ozonfreie Gas als Rückkühlebene, wobei jeder der Bereiche zumindest eine Ebene aufweist, und die Vorheizebenen in Wärmekontakt zu den Rückkühlebenen angeordnet sind.

Die Vorrichtung weist zumindest eine Heizung auf. Weiterhin ist eine Mehrzahl von Vorheizebenen und Rückkühlebenen vorgesehen, wobei die Anzahl der Rückkühlebenen die der Vorheizebenen um zumindest eine übersteigt. Beide Bereiche, also der Bereich für das ozonhaltige Gas (Vorheizebenen) und der Bereich für das im Wesentlichen ozonfreie Gas (Rückkühlebenen), werden im Prinzip relativ zueinander im Gegenfluss durchströmt.

Gemäß einer bevorzugten Ausführungsform sind der Bereich, in den das zu erwärmende ozonhaltige Gas einfließt und der Bereich, in dem das abzukühlende, im wesentlichen ozonfreie Gas den Wärmetauscher wieder verlässt, relativ zueinander so durchströmt, dass sich die jeweiligen Fließrichtungen des ein- und ausströmenden Gases kreuzen.

Damit wird erfindungsgemäß ein rekuperativer Wärmetauscher zur Verfügung gestellt, der als Plattenwärmetauscher ausgebildet ist. Mit dieser Anordnung ist es möglich, dass das ozonhaltige Gas nahezu frei von Druckverlusten durch das abzukühlende, im Wesentlichen ozonfreie Gas vorgeheizt wird. Durch die Umkehrung der Strömungsrichtung des aus dem Wärmetauscher ausströmenden, im Wesentlichen ozonfreien Gases relativ zu dem einströmenden ozonhaltigen Gas werden die beiden Bereiche des Wärmetauschers im Prinzip relativ zueinander im Gegenfluss durchströmt. Vorzugsweise kreuzen sich die Fließrichtung des einströmenden, zu erwärmenden ozonhaltigen Gases mit der des abzukühlenden, im Wesentlichen ozonfreien Gases bei dessen Weg zum Auslass. Auf diese Weise wird eine maximale Temperaturdifferenz gewährleistet und damit der maximal mögliche Wärmeaustausch sichergestellt, zumal sich die den Wärmeaustausch bewirkenden Vorheiz- und Rückkühlebenen in innigem (Wärme-) Kontakt zueinander befinden, bei gleichzeitig optimaler Kompaktheit in Bezug auf die Bauweise der Vorrichtung.

Dabei ist der erfindungsgemäße Erfolg der Vorrichtung nicht zwangsläufig auf eine Kombination von Umkehrung der Strömungsrichtung und kreuzweiser Anordnung der Fließrichtungen beschränkt. Je nach Anforderungsprofil kann das Ergebnis ausreichend sein, wenn keine kreuzweise Anordnung der Fließrichtungen vorgesehen ist.

Wenn sich zusätzlich zu dem Ozon noch Doppelbindungen aufweisende organische Substanzen in dem einströmenden Gas befinden, reicht meist bereits die Temperatur der Vorheizebene, um die enthaltenen organischen Doppelbindungen zu cracken.

Die erfindungsgemäße Vorrichtung ist so ausgestaltet, dass dem Reaktionsraum eine Sammelkammer für das ozonhaltige Gas vorgeordnet und eine Verteilerkammer für das im wesentlichen ozonfreie Gas nachgeordnet ist. Dies ist vor allen Dingen dann sinnvoll, wenn der eine Bereich, der das zu erwärmende, ozonhaltige Gas aufweist und/oder der andere Bereich, in dem das abzukühlende, im Wesentlichen ozonfreie Gas zu dem Auslass geführt wird, aus mehreren Vorheizebenen bzw. Rückkühlebenen aufgebaut sind. Dann dient die Sammelkammer für das ozonhaltige Gas der Zusammenführung des Gases aus allen vorhandenen Ebenen, und die Verteilerkammer dient zum Weiterführen des im Wesentlichen ozonfreien Gases in die jeweiligen Rückkühlebenen.

Erfindungsgemäß ist es vorgesehen , dass die Anzahl der Rückkühlebenen des Wärmetauschers die der Vorheizebenen um zumindest eine übersteigt. Dies ist zweckmäßig, weil das einströmende ozonhaltige Gas durch die Erwärmung eine Komprimierung erfährt.

Der Reaktionsraum der erfindungsgemäßen Vorrichtung weist zumindest eine Heizung auf, mit welcher das ozonhaltige Gas auf die für die Zerstörung des Ozons erforderliche Temperatur gebracht wird. Die erfindungsgemäße Vorrichtung arbeitet insgesamt sehr wirtschaftlich, denn bei guter Isolierung entspricht die durch die Heizung zugeführte Heizenergie der Temperaturdifferenz der Gasströme am Ein- bzw. Ausgang des Wärmetauschers.

Die Sammelkammer und die Verteilerkammer sind gemäß einer weiteren Ausgestaltung der erfindungsgemäßen Vorrichtung jeweils so angeordnet, dass die Verteilerkammer dem Einlass der zumindest einen Vorheizebene und die Sammelkammer dem Auslass der zumindest einen Rückkühlebene gegenüberliegen. Auf diese Weise wird durch einfache konstruktive Maßnahmen erreicht, dass sich die Fließrichtungen des einströmenden, zu erwärmenden, ozonhaltigen Gases und des ausströmenden, abzukühlenden, im wesentlichen ozonfreien Gases im Bereich der Vorheizebenen und der Rückkühlebenen kreuzen.

Die eingangs genannte Aufgabe wird auch gelöst durch ein Verfahren zur Zerstörung von Ozon aus Gasen, bei dem das ozonhaltige Gas über einen Einlass in einen ersten Bereich eines Wärmetauschers einströmt und über eine Sammelkammer zu einem Reaktionsraum für die Ozonzerstörung geführt wird, in dem das Gas mittels zumindest einer Heizung auf eine Temperatur für die Zerstörung des Ozons erhitzt wird, von wo aus das heiße Gas anschließend eine Verteilerkammer passiert und unter Umkehrung der Strömungsrichtung, im Wesentlichen ozonfrei in einen weiteren Bereich des Wärmetauschers zu einem Auslass für das Gas geführt wird, wobei das ein- wie das ausströmende Gas jeweils durch unmittelbar aneinandergrenzende Platten strömt, die jeweils in Einström- wie in Ausströmrichtung Ebenen bilden, mit einer Mehrzahl von Ebenen in Einströmrichtung als Vorheizebenen und einer Mehrzahl von Ebenen in Ausströmrichtung als Rückkühlebenen, so dass das ausströmende Gas der Rückkühlebenen das einströmende Gas der Vorheizebenen durch Wärmekontakt der Ebenen zueinander und unter gleichzeitigem eigenem Abkühlen erwärmt.

Die Anzahl der Rückkühlebenen übersteigt die Anzahl der Vorheizebenen um zumindest eine, und beide Bereiche des Wärmetauschers werden im Prinzip relativ zueinander im Gegenfluss durchströmt.

Die Vorheizebenen sind jeweils in innigem (Wärme-) Kontakt zu den Rückkühlebenen angeordnet, um so einen effizienten Wärmeaustausch zu ermöglichen.

Bei der Durchführung des erfindungsgemäßen Verfahrens wird das Gas nach dem Durchströmen der Ebenen des ersten Bereichs zunächst in eine Sammelkammer und dann in den Reaktionsraum geführt. Wie schon weiter oben im Hinblick auf die erfindungsgemäße Vorrichtung ausgeführt, ist dies besonders vorteilhaft, da mehr als eine Vorheizebene vorhanden ist, um das Gas in der Sammelkammer zusammenzuführen und von dort aus in den Reaktionsraum führen zu können.

Entsprechend wird das Gas im Anschluss an den Reaktionsraum in eine Verteilerkammer und von dort dem einströmenden Gas entgegen zu dem Auslass geführt. Die Verteilerkammer übernimmt dann das Verteilen des gereinigten, im Wesentlichen ozonfreien Gases auf die verschiedenen Rückkühlebenen. Dabei ist es aufgrund der Komprimierung des Gases durch die Erwärmung in der Vorheizebene ganz besonders vorteilhaft, dass zumindest eine Rückkühlebene mehr vorgesehen ist als Vorheizebenen vorhanden sind.

Gemäß einer weiteren Ausgestaltung des erfindungsgemäßen Verfahrens kann vorgesehen sein, dass sich die Fließrichtungen des einströmenden, ozonhaltigen und des ausströmenden, im wesentlichen ozonfreien Gases kreuzen.

Das erfindungsgemäße Verfahren kann sowohl bei trockenen als auch bei feuchten, wasserhaltigen Gasen erfolgreich eingesetzt werden.

Um die thermische Zerstörung des Ozons zu bewirken, wird das Gas in dem Reaktionsraum auf zumindest 300 °C, vorzugsweise auf 350 °C und besonders bevorzugt auf über 350 °C aufgeheizt.

Die erfindungsgemäße Vorrichtung zur Zerstörung von Ozon aus Gasen und das entsprechende Verfahren können bevorzugt in Systemen eingesetzt werden, bei welchen in der Halbleiterindustrie die Wafer-Reinigung eine vollständige Zerstörung des bei der Reinigung in hohen Konzentrationen zugeführten Ozons fordert. Hierfür ist die erfindungsgemäße Vorrichtung auch deshalb besonders vorteilhaft geeignet, weil sie durch den Aufbau als Plattenwärmetauscher mit integriertem Reaktionsraum und damit mit integrierter elektrischer Heizung eine äußerst kompakte, wenig Raum erfordernde Vorrichtung darstellt, wie sie in der Halbleiterindustrie gefordert ist.

Im Folgenden wird die Erfindung anhand eines speziellen Ausführungsbeispiels näher erläutert.

Es zeigen:
- Fig. 1:: eine schematische, teilweise geschnittene Aufsicht auf eine erfindungsgemäße Vorrichtung zur Zerstörung von Ozon aus Gasen mit rekuperativem Wärmetauscher in kreuzweiser Durchströmung,
- Fig.2a:: eine schematische Ansicht der erfindungsgemäßen Vorrichtung mit Wärmetauscher und Reaktionsraum integriert in einem Gehäuse,
- Fig. 2b:: eine schematische Ansicht der Platten des Wärmetauschers in Bezug auf ihre Vorheiz- und Rückkühlebenen, und
- Fig. 2c:: eine schematische Ansicht der Platten des Wärmetauschers in Bezug auf ihre Vorheiz- und Rückkühlebenen gemäß einer um 90° gedrehten Ansicht.

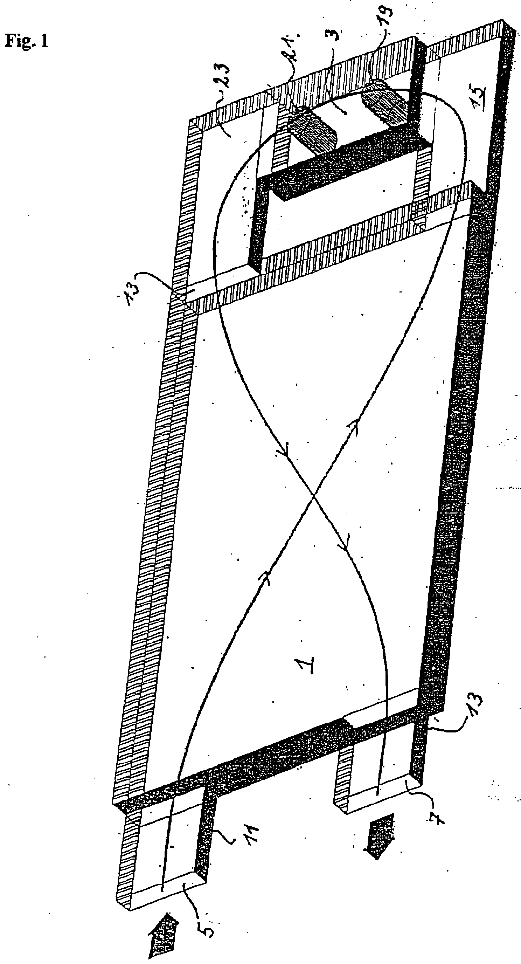

In Fig. 1 ist eine Vorrichtung zum Zerstören von Ozon aus Gasen gezeigt, die einen Wärmetauscher 1 und einen Reaktionsraum 3 für die Ozonzerstörung aufweist. Mit der Bezugsziffer 5 ist ein Einlass für das zu erwärmende ozonhaltige Gas angegeben, und die Bezugsziffer 7 bezeichnet einen Auslass für das abzukühlende, im wesentliche ozonfreie Gas. Der Wärmetauscher 1 ist als dichtungsfreier rekuperativer Plattenwärmetauscher ausgebildet und dient der Wärmeübertragung von dem im Wesentlichen ozonfreien Gas auf das ozonhaltige Gas, ohne jeden physikalischen Kontakt mit diesem, d.h. ohne das ozonfreie Gas mit dem ozonhaltigen Gas zu vermischen. Dadurch sind in dem Wärmetauscher 1 zwei Bereiche voneinander zu unterscheiden. Der eine Bereich mit dem Einlass 5 für das zu erwärmende, ozonhaltige Gas, das in Richtung auf den Reaktionsraum 3 strömt; und der andere Bereich mit dem Auslass 7 für das abzukühlende, im wesentlichen ozonfreie Gas, der von dem Reaktionsraum (3) in Richtung auf den Auslass 7 führt. Beide Bereiche sind durch jeweils dicht nebeneinanderliegende Platten 9 gebildet, so dass ein inniger Wärmekontakt zwischen dem einströmenden und dem zum Auslass 7 strömenden Gas besteht, um eine gute Wärmeübertragung zu gewährleisten, und jeder der genannten Bereiche definiert zumindest eine Plattenebene. Der dargestellte Wärmetauscher 1 weist zumindest zwei solcher Plattenebenen auf. Im Bereich für das ozonhaltige Gas dient diese Ebene als Vorheizebene 11 und im Bereich des ozonfreien Gases als Rückkühlebene 13. Aus wirtschaftlichen Aspekten ist es sinnvoll, mehrere Vorheizebenen 11 und Rückkühlebenen 13 vorzusehen. Aufgrund der Komprimierung des Gases bei der Erwärmung ist die Anzahl der Rückkühlebenen 13 um zumindest eine Ebene grösser als die Anzahl der Vorheizebenen 11. Zum Zweck einer besseren Übersichtlichkeit ist der in der Figur angegebene Wärmetauscher 1 nicht mit einer Vielzahl von Ebenen ausgestattet. Die Platten 9 des Wärmetauschers 1 bestehen im Ausführungsbeispiel aus gasdicht verschweißtem Edelstahl.

Von der einen hier dargestellten Vorheizebene 11 wird das ozonhaltige Gas in eine Sammelkammer 15 geleitet, die im Wesentlichen die Aufgabe hat, das aus verschiedenen Vorheizebenen 11 strömende ozonhaltige Gas zusammenzuführen und in den Reaktionsraum 3 zu leiten. Dieser Reaktionsraum 3 weist im Ausführungsbeispiel zwei Heizungen 19, 21 auf, durch welche das ozonhaltige Gas auf mehr als 350 °C aufgeheizt wird. Die Temperatur wird über ein Thermoelement kontrolliert, der in Fig. 1 nicht dargestellt ist. Durch die Temperatur von in diesem Ausführungsbeispiel mehr als 350 °C wird das Ozon in dem Reaktionsraum (3) spontan zerstört.

Der Reaktionsraum 3 ist nicht der einzige Ort, an dem in der erfindungsgemäßen Vorrichtung eine Ozonzerstörung stattfindet. Aufgrund des in der Vorheizebene 11 des Wärmetauschers 1 herrschenden Temperaturprofils findet auch dort bereits eine Ozonzerstörung statt. Die Vorheizebene 11 trägt wesentlich zur Reaktionsenthalpie bei. Aufgrund der Vorheizleistung des Wärmetauschers 1 in der Vorheizebene 11 ist davon auszugehen, dass die Temperatur in der Sammelkammer bereits in etwa 300 °C beträgt. Diese Temperatur ist ausreichend, um einen erheblichen Teil des Ozons zu zerstören. Die im Wesentlichen vollständige Zerstörung des Ozons gelingt jedoch erst in dem Reaktionsraum 3.

Das heiße, im Wesentlichen ozonfreie Gas wird aus dem Reaktionsraum 3 in eine Verteilerkammer 23 geleitet, welche die Aufgabe hat, das Gas in die verschiedenen Rückkühlebenen 13 zu führen. Da die Rückkühlebene(n) 13 in innigem Kontakt mit der Platte oder den Platten der Vorheizebene(n) 11 stehen, so dass die Platten der jeweiligen Ebenen unmittelbar aneinandergrenzen, wird nun das aus der Verteilerkammer 23 unter Umkehr der Strömungsrichtung auf den Auslass 7 zuströmende ozonfreie Gas quasi im Gegenstrom mit dem aus der Vorheizebene 11 oder den Vorheizebenen 11 in Richtung auf die Sammelkammer 15 strömenden Gas in Kontakt gebracht. Dabei ist die Sammelkammer 15 so angeordnet, dass sie dem Auslass 7 gegenüberliegt, und die Verteilerkammer 23 liegt entsprechend dem Einlass 5 gegenüber. Auf diese Weise wird konstruktiv einfach und gleichzeitig wirkungsvoll erreicht, dass sich die Fließrichtungen des einströmenden Gases und des ausströmenden Gases kreuzen. Dies führt zu einem maximal möglichen Wärmeaustausch. Durch diesen Wärmeaustausch kühlt sich das aus dem Reaktionsraum 3 über die Verteilerkammer 23 in Richtung auf den Auslass 7 strömende ozonfreie Gas in etwa auf die Temperatur des durch Einlass 5 in die Vorheizebene 11 strömenden ozonhaltigen Gases ab, während das ozonhaltige Gas entsprechend erwärmt wird.

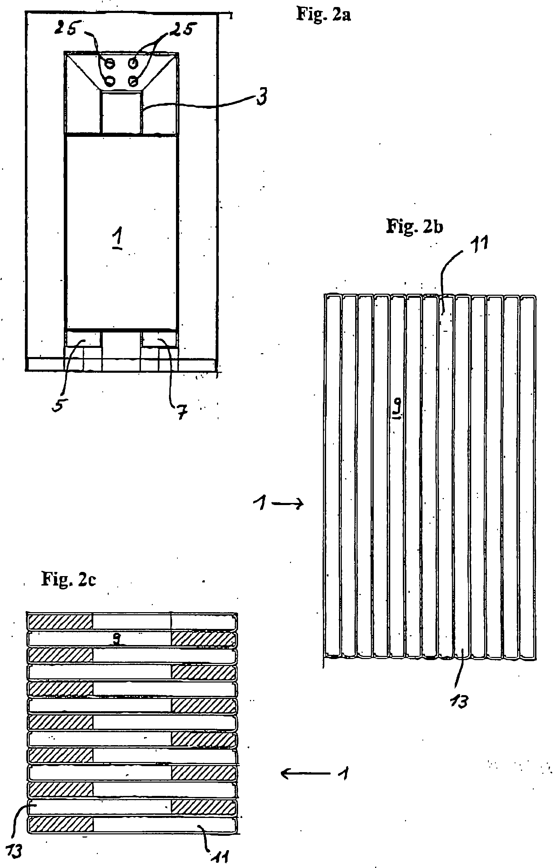

In den Fig. 2a - 2c ist die konstruktive Ausgestaltung des erfindungsgemäßen Ozonzerstörers noch einmal in schematisierter Form dargestellt. Dabei zeigt Fig. 2a die relative Anordnung des Wärmetauschers 1 zu dem Reaktionsraum 3. Mit 25 sind dabei die Anschlüsse für die Heizung bezeichnet. Die Anordnung der Vorheiz- und Rückkühlebenen 11, 13 in Form der dicht nebeneinander liegenden Platten 9 des Wärmetauschers 1 zur Gewährleistung eines innigen Wärmekontakts sind in Fig. 2b und in einer weiteren, nur hinsichtlich der Perspektive geänderten Ansicht in Fig. 2c dargestellt.

In der nachfolgenden Tabelle 1 sind beispielhafte Konstruktionsdaten für den erfindungsgemäßen rekuperativen Wärmetauscher angegeben.

**Tabelle 1:**

| Anzahl der Ebenen | Spaltbreite [mm] | Spaltlänge [mm] |
|---|---|---|
| 6 | 10 | 250 |

In einer weiteren Tabelle 2 sind die jeweils an Einlass 5 und Auslass 7 gemessenen Temperaturen des Gases, der jeweilige Ozongehalt und die zu beobachtende Druckdifferenz angegeben. Die Temperatur im Reaktionsraum 3 betrug etwa 380 °C.

**Tabelle 2:**

| T [°C] Einlass | T [°C] Auslass | O₃/Einlass [g/m³] | O₃/Auslass [g/m³] | Gasstrom m³/h | Δp [mbar] |
|---|---|---|---|---|---|
| 20 | 70 | 100 | 0 | 2 | 0,05 |

Wie die Tabelle 2 zeigt, weist der Wärmetauscher 1 einen sehr hohen Wärmerückgewinnungsgrad auf, bei vollständiger Zerstörung des Ozons in dem Gas und minimaler Druckdifferenz. Dadurch können die sehr hohen Wärmerückgewinnungsgrade in außerdem sehr wirtschaftlicher Weise erreicht werden.

Der erfindungsgemäß verwendete rekuperative Wärmetauscher 1 zeichnet sich somit durch eine hervorragende Wärmeübertragung aus, die 3 bis 5 mal besser ist als die von Röhrenwärmetauschern. Außerdem hat der rekuperative Wärmetauscher 1 je nach Ausgestaltung einen bis zu 90% geringeren Platzbedarf im Vergleich zu dem Röhrenwärmetauscher. Er lässt sich somit problemlos transportieren und installieren.

Es ergibt sich daher von selbst, dass die erfindungsgemäße Vorrichtung als Kombination aus dem Plattenwärmetauscher 1 und dem mit elektrischer Heizung 19, 21 versehenen Reaktionsraum 3 ebenso für beliebige andere Einsatzzwecke verwendet werden kann, bei denen es um die thermische Zerstörung von Ozon, insbesondere von Ozon in hoher Konzentration, in trockenen wie in feuchten Gasen geht. Beispielsweise sind als weitere Einsatzzwecke die Abwasserreinigung oder die Papierbleiche zu nennen, in denen ebenfalls höchste Ozonkonzentrationen eingesetzt werden.

Der besondere Vorteil der erfindungsgemäßen Vorrichtung und des erfindungsgemäßen Verfahrens liegt allgemein darin, dass sehr hohe Ozonkonzentrationen in wirtschaftlicher Weise zerstört werden können, und dass dies vollständig möglich ist.

## Patentansprüche

1. Vorrichtung zur Zerstörung von Ozon aus Gasen, mit einem Wärmetauscher (1) und zwei voneinander separaten, zueinander in Kontakt stehenden Bereichen und einem Reaktionsraum (3) für die Ozonzerstörung mit zumindest einer Heizung (19, 21), wobei dem Reaktionsraum (3) eine Sammelkammer (15) für das ozonhaltige Gas vorgeordnet und eine Verteilerkammer (23) für das im wesentlichen ozonfreie Gas nachgeordnet ist, wobei der eine Bereich einen Einlass (5) für das zu erwärmende, ozonhaltige Gas aufweist und zu dem Reaktionsraum (3) führt, und der andere Bereich unter Umkehrung der Strömungsrichtung von dem Reaktionsraum (3) zu einem Auslass (7) für das abzukühlende, im wesentlichen ozonfreie Gas führt, **dadurch gekennzeichnet, dass** beide Bereiche jeweils durch unmittelbar aneinandergrenzende Platten (9) gebildet sind, die Ebenen definieren, mit dem Bereich für das ozonhaltige Gas als Vorheizebene (11) und dem Bereich für das im wesentlichen ozonfreie Gas als Rückkühlebene (13), wobei jeder der Bereiche eine Mehrzahl von Vorheizebenen (11) und Rückkühlebenen (13) aufweist, die Anzahl der Rückkühlebenen (13) die der Vorheizebenen (11) um zumindest eine übersteigt, und die Vorheizebenen (11) in Wärmekontakt zu den Rückkühlebenen (13) angeordnet sind, und wobei beide Bereiche des Wärmetauschers (1) im Prinzip relativ zueinander im Gegenfluss durchströmt sind.

2. Vorrichtung nach Anspruch 1, **dadurch gekennzeichnet, dass** die beiden Bereiche relativ zueinander so durchströmt sind, dass sich die jeweiligen Fließrichtungen des einströmenden und des zum Auslass (7) strömenden Gases kreuzen.

3. Vorrichtung nach Anspruch 1 oder Anspruch 2, **dadurch gekennzeichnet, dass** die Sammelkammer (15) und die Verteilerkammer (23) jeweils so angeordnet sind, dass die Verteilerkammer (23) dem Einlass (5) der zumindest einen Vorheizebene (11) und die Sammelkammer (15) dem Auslass (7) der zumindest einen Rückkühlebene (13) gegenüberliegt.

4. Verfahren zur Zerstörung von Ozon aus Gasen, bei dem das ozonhaltige Gas über einen Einlass (5) in einen ersten Bereich eines Wärmetauschers (1) einströmt und über eine Sammelkammer (15) zu einem Reaktionsraum (3) für die Ozonzerstörung geführt wird, in dem das Gas mittels zumindest einer Heizung (19, 21) auf eine Temperatur für die Zerstörung des Ozons erhitzt wird, von wo aus das heiße Gas anschließend eine Verteilerkammer (23) passiert und unter Umkehrung der Strömungsrichtung, im wesentlichen ozonfrei in einen weiteren Bereich des Wärmetauschers (1) zu einem Auslass (7) für das Gas geführt wird, wobei das ein- wie das ausströmende Gas jeweils durch unmittelbar aneinandergrenzende Platten (9) strömt, die jeweils in Einström- wie in Ausströmrichtung Ebenen bilden, mit einer Mehrzahl von Ebenen in Einströmrichtung als Vorheizebenen (11) und einer Mehrzahl von Ebenen in Ausströmrichtung als Rückkühlebenen (13), wobei die Anzahl der Rückkühlebenen (13) die der Vorheizebenen (11) um zumindest eine übersteigt, so dass das zum Auslass (7) strömende, zuvor von der Verteilerkammer (23) in die verschiedenen Rückkühlebenen (13) geführte Gas das einströmende Gas der Vorheizebenen (11) durch Wärmekontakt der Ebenen zueinander und unter gleichzeitigem eigenen Abkühlen erwärmt, und wobei beide Bereiche des Wärmetauschers (1) im Prinzip relativ zueinander im Gegenfluss durchströmt werden.

5. Verfahren nach Anspruch 4, **dadurch gekennzeichnet, dass** sich die Fließrichtungen von einströmendem und zum Auslass (7) strömendem Gas kreuzen.

6. Verfahren nach Anspruch 4 oder 5, **dadurch gekennzeichnet, dass** das Gas in dem Reaktionsraum (3) auf zumindest 300 °C, vorzugsweise auf 350 °C und besonders bevorzugt auf über 350 °C aufgeheizt wird.

7. Verwendung der Vorrichtung zur Zerstörung von Ozon aus Gasen gemäß einem der Ansprüche 1 bis 3 und des Verfahrens gemäß einem der Ansprüche 4 bis 6 bei der Wafer-Reinigung in der Halbleiterindustrie.

## Claims

1. A device for destroying ozone from gases, comprising a heat exchanger (1) and two separate regions that are in contact with each other, and a reaction chamber (3) for ozone destruction comprising at least one heater (19, 21), wherein a collection chamber (15) for the ozone-containing gas being disposed upstream and a distribution chamber (23) for the essentially ozone-free gas being disposed downstream of the reaction chamber (3), wherein the one region having an inlet (5) for the ozone-containing gas to be heated and leading to the reaction chamber (3), and the other region leading from the reaction chamber (3) to the outlet (7) for the essentially ozone-free gas to be cooled, reversing the flow direction, **characterized in that** each of the two regions is formed by plates (9) directly abutting one another and defining planes, the region for the ozone-containing gas constituting a preheating plane (11) and the region for the essentially ozone-free gas constituting a recooling plane (13), wherein each region comprising a plurality of preheating planes (11) and recooling planes (13), the number of the recooling planes (13) exceeding that of the preheating planes (11) by at least one, and the preheating planes (11) being disposed so as to be in heat contact with the recooling planes (13), and wherein essentially a counterflow taking place through the two regions of the heat exchanger (1) relative to each other.

2. The device according to claim 1, **characterized in that** the flow through the two regions relative to each other is such that the respective flow directions of the inflowing gas and the gas flowing to the outlet (7) cross.

3. The device according to claim 1 or claim 2, **characterized in that** the collection chamber (15) and the distribution chamber (23) are each disposed in such a manner that the distribution chamber (23) is situated opposite the inlet (5) of the at least one preheating plane (11), and the collection chamber (15) is situated opposite the outlet (7) of the at least one recooling plane (13).

4. A method for destroying ozone from gases, in which the ozone-containing gas flows via an inlet (5) into a first region of a heat exchanger (1) and is conducted via a collection chamber (15) to a reaction chamber (3) for ozone destruction, in which the gas is heated by way of at least one heater (19, 21) to a temperature to destroy the ozone, from where the hot gas subsequently passes a distribution chamber (23) and, reversing the flow direction, is conducted in an essentially ozone-free manner in a further region of the heat exchanger (1) to an outlet (7) for the gas, wherein the inflowing and outflowing gas in each case flows through directly abutting plates (9), which each form planes in the inflow direction and in the outflow direction, coimprising a plurality of planes in the inflow direction as preheating planes (11) and a plurality of planes in the outflow direction as recooling planes (13), wherein the number of the recooling planes (13) exceeding that of the preheating planes (11) by at least one, so that the gas flowing to the outlet (7), which previously was conducted from the distribution chamber (23) into the various recooling planes (13), heats the inflow gas of the preheating planes (11) by way of heat contact of the planes with each other, while at the same time cooling down, and wherein essentially a counterflow takes place through the two regions of the heat exchanger (1) relative to each other.

5. The method according to claim 4, **characterized in that** the flow directions of inflowing gas and gas flowing to the outlet (7) cross.

6. The method of claim 4 or 5, **characterized in that** the gas in the reaction chamber (3) is heated to at least 300 °C, preferably to 350 °C, and particularly preferably to over 350 °C.

7. Use of the device for destroying ozone from gases according to any one of claims 1 to 3 and of the method according to any one of claims 4 to 6 in the cleaning of wafers in the semiconductor industry.

## Revendications

1. Dispositif de destruction de l'ozone dans des gaz, avec un échangeur de chaleur (1) et deux régions séparées l'une de l'autre, étant en contact l'une avec l'autre, et une chambre de réaction (3) pour la destruction de l'ozone avec au moins un chauffage (19, 21), où une chambre de collecte (15) pour le gaz contenant l'ozone est disposée avant la chambre de réaction (3) et une chambre de distribution (23) est disposée après pour le gaz essentiellement exempt d'ozone, où une région donnée présente une entrée (5) pour le gaz contenant de l'ozone devant être réchauffé et mène vers la chambre de réaction (3), et l'autre région mène vers une sortie (7) pour le gaz essentiellement exempt d'ozone devant être refroidi, moyennent une inversion du sens d'écoulement **caractérisé en ce que** les deux régions respectives sont formées par des plaques (9) immédiatement limitrophes l'une de l'autre, qui définissent des plans, avec la région pour le gaz contenant de l'ozone servant de plan de préchauffage (11) et avec la région pour le gaz essentiellement exempt d'ozone servant de plan de refroidissement ultérieur (13), où chacune des régions présente une multiplicité de plans de préchauffage (11) et de plans de refroidissement ultérieur (13), le nombre de plans de refroidissement ultérieur (13) dépasse d'au moins un celui des plans de préchauffage (11), et les plans de préchauffage (11) sont disposés en contact thermique avec les plans de refroidissement ultérieur (13), et où les deux régions de l'échangeur de chaleur (1) sont traversées selon le principe d'un contre-courant relativement l'une par rapport à l'autre.

2. Dispositif selon la revendication 1, **caractérisé en ce que** les deux régions sont traversées relativement l'une par rapport à l'autre de telle manière que les sens d'écoulement respectifs du gaz entrant et du gaz s'écoulant de la sortie (7) se croisent.

3. Dispositif selon la revendication 1, ou la revendication 2, **caractérisé en ce que** la chambre de collecte (15) et la chambre de distribution (23) sont disposées respectivement de telle manière que la chambre de distribution (23) est située en face de l'entrée (5) de l'au moins un plan de préchauffage (11) et la chambre de collecte (15) est située en face de la sortie (7) de l'au moins un plan de refroidissement ultérieur (13).

4. Procédé de destruction d'ozone dans des gaz, dans lequel le gaz contenant de l'ozone s'écoule dans une première région d'un échangeur de chaleur (1) par l'intermédiaire d'une entrée (5) et est mené vers une chambre de réaction (3) pour la destruction de l'ozone par l'intermédiaire d'une chambre de collecte (15), dans laquelle le gaz est chauffé à une température pour la destruction de l'ozone au moyen d'au moins un chauffage (19, 21), à partir de laquelle le gaz chaud passe ensuite par une chambre de distribution (23) et moyennent une inversion du sens d'écoulement, est mené vers une sortie (7) pour le gaz à l'état essentiellement exempt d'ozone dans une autre région de l'échangeur de chaleur (1), où le gaz entrant ainsi que le gaz sortant passent respectivement à travers des plaques (9) immédiatement limitrophes l'une de l'autre, qui forment respectivement les plans d'entrée de flux ainsi que les plans de sortie de flux, avec une multiplicité de plans dans le sens de l'entrée sous la forme de plans de préchauffage (11) et une multiplicité de plans dans le sens de la sortie sous forme de plans de refroidissement ultérieur (13), où le nombre des plans de refroidissement ultérieur (13) dépasse d'au moins un le nombre des plans de préchauffage (11), de sorte que le gaz s'écoulant vers la sortie (7) mené auparavant dans les divers plans de refroidissement ultérieurs (13) à partir de la chambre de distribution (23) réchauffe le gaz des plans de préchauffage (11) entrant par un contact thermique des plans l'un par rapport à l'autre et en se refroidissant simultanément, et où les deux régions de l'échangeur de chaleur (1) sont traversés en principe en sens contraires l'un par rapport à l'autre.

5. Procédé selon la revendication 4, **caractérisé en ce que** les sens d'écoulement du gaz entrant et du gaz s'écoulant vers la sortie (7) se croisent.

6. Procédé selon la revendication 4, ou 5, **caractérisé en ce que** le gaz dans la chambre de réaction (3) est réchauffé à au moins 300 °C, de préférence à 350 °C et de manière particulièrement préférée au dessus de 350 °C.

7. Utilisation du dispositif de destruction de l'ozone dans des gaz selon l'une des revendications 1 à 3 et du procédé selon l'une des revendications 4 à 6 lors du nettoyage d'une tranche dans l'industrie des semi-conducteurs.
